# EUROPEAN PATENT APPLICATION

(11) **EP 4 692 784 A1**
(43) Date of publication of application: **11.02.2026**
(21) Application number: 23930805.9
(22) Date of filing: 02.11.2023
(51) Int. Cl.: G01N 30/32, G01N 30/46, G01N 30/68, G01N 30/70, G01N 30/88

(54) **GAS ANALYSIS DEVICE**

(30) Priority: 31.03.2023 JP 2023058636
(71) Applicant: SHIMADZU CORPORATION, Kyoto-shi, Kyoto 604-8511 (JP)
(72) Inventor: UCHIYAMA, Shinji, Kyoto-shi, Kyoto 604-8511 (JP)
(74) Representative: Müller-Boré & Partner Patentanwälte PartG mbB
(86) International application number: PCT/JP2023/039682
(87) International publication number: WO 2024/202176

(57) **Abstract**

A gas analyzer for detecting a greenhouse gas contained in a sample gas, comprising a carrier gas supply unit that supplies nitrogen as a carrier gas to each of two different flow paths, a sample introduction unit that introduces the sample gas into each of the two different flow paths, a first column and a second column connected to each of the two different flow paths, a flame ionization detector connected to the first column, a methanizer that reduces carbon dioxide flowing out of the first column and into the flame ionization detector to methane, and an electron capture detector connected to the second column. With such a configuration, the configuration of an analyzer used for the analysis of greenhouse gases can be simplified, and the running cost of analysis by the gas analyzer can be reduced.

## Description

### TECHNICAL FIELD

The present invention relates to a gas analyzer.

### BACKGROUND ART

In a gas analyzer that performs gas analysis by gas chromatography, it is necessary to use an appropriate detector according to the type of compound to be detected. For example, when analyzing methane (CH4), carbon dioxide (CO2), and nitrous oxide (N2O), which are major greenhouse gases, a Flame Ionization Detector (FID) is used for the detection of CH4, a Thermal Conductivity Detector (TCD) is used for the detection of CO2, and an Electron Capture Detector (ECD) is used for the detection of N2O.

### PRIOR ART DOCUMENTS

### PATENT DOCUMENTS

[Patent Document 1] International Publication No. WO 2017/138646

### SUMMARY OF INVENTION

### PROBLEM TO BE SOLVED BY THE INVENTION

Therefore, when simultaneously analyzing the three components CH4, CO2, and N2O, it is necessary to provide the gas analyzer with the three types of detectors mentioned above, as well as a complex valve system (see, for example, Patent Document 1) for switching the flow paths of the carrier gas and the sample gas, which has been a problem as it complicates the apparatus configuration. Furthermore, to detect CO2 with high precision using a TCD, it is necessary to use He gas as the carrier gas, but recently there has been a global shortage of He, and its price has soared. Also, as a detector gas for an ECD (a gas that needs to be introduced into the detector based on its detection principle), nitrogen (N2) is generally used. However, to detect N2O with high precision using an ECD, it is necessary to use argon gas containing 5% methane (hereinafter referred to as "Ar+5%CH4") as the detector gas. Therefore, in that case, there has been a problem of increased running costs compared to when N2 is used.

That is, a first problem of the present invention is to simplify the configuration of an analyzer used for the analysis of greenhouse gases and to reduce the running cost of analysis by the gas analyzer. A second problem of the present invention is to enable detection with sufficient sensitivity in an analyzer used for the analysis of greenhouse gases without using Ar+5%CH4 as the detector gas when detecting N2O with an ECD.

### MEANS FOR SOLVING THE PROBLEM

A gas analyzer according to a first aspect of the present invention, made to solve the above problems, is a gas analyzer for detecting a greenhouse gas contained in a sample gas, comprising:
a carrier gas supply unit that supplies nitrogen as a carrier gas to each of two different flow paths;
a sample introduction unit that introduces the sample gas into each of the two different flow paths;
a first column and a second column connected to each of the two different flow paths;
a flame ionization detector connected to the first column;
a methanizer that reduces carbon dioxide flowing out of the first column and into the flame ionization detector to methane; and
an electron capture detector connected to the second column.

A gas analyzer according to a second aspect of the present invention, made to solve the above problems, is a gas analyzer for detecting a greenhouse gas contained in a sample gas, comprising:
an adsorption-type column;
a sample introduction unit that introduces the sample gas to one end of the adsorption-type column;
an electron capture detector connected to the other end of the adsorption-type column;
a detector gas supply unit that supplies nitrogen as a detector gas to the electron capture detector;
a column oven that accommodates the adsorption-type column;
a temperature control unit that adjusts the temperature inside the column oven; and
a control unit that controls the temperature control unit such that, at the time the sample gas is introduced into the adsorption-type column, the temperature inside the column oven is lower than a first temperature, which is the upper limit of the temperature at which nitrous oxide is adsorbed in the adsorption-type column and does not desorb, and thereafter, the temperature inside the column oven is raised to or above the first temperature.

### EFFECTS OF THE INVENTION

According to the gas analyzer of the first aspect of the present invention, the configuration of the analyzer used for the analysis of greenhouse gases can be simplified, and the running cost of the analysis can be reduced.

According to the gas analyzer of the second aspect of the present invention, in an analyzer used for the analysis of greenhouse gases, it becomes possible to detect N2O with sufficient sensitivity without using Ar+5%CH4 as the detector gas for the ECD.

### BRIEF DESCRIPTION OF DRAWINGS

[FIG. 1] FIG. 1 is a schematic configuration diagram of a gas analyzer according to an embodiment of the present invention.
[FIG. 2] FIG. 2 is a schematic configuration diagram of a gas analyzer according to another embodiment of the present invention.
[FIG. 3] FIG. 3 is a chromatogram showing the measurement results of CH4 and CO2 in the atmosphere in an example of the present invention.
[FIG. 4] FIG. 4 is a chromatogram showing the measurement result of N2O in the atmosphere in the same example.

### DESCRIPTION OF EMBODIMENTS

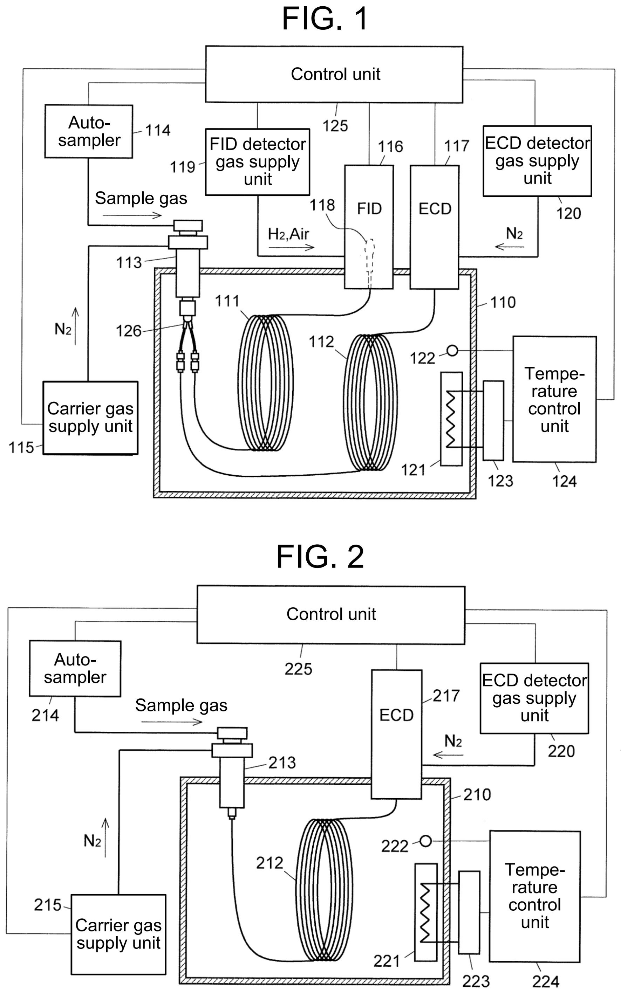

Hereinafter, embodiments for carrying out the present invention will be described with reference to the drawings. FIG. 1 is a schematic configuration diagram of a gas analyzer according to an embodiment of the present invention.

The gas analyzer according to the present embodiment simultaneously analyzes methane (CH4), carbon dioxide (CO2), and nitrous oxide (N2O), which are major greenhouse gases, by gas chromatography. This gas analyzer comprises a column oven 110; a first column 111 and a second column 112 housed in the column oven 110; a sample introduction unit 113 connected to the inlet ends of the first column 111 and the second column 112; an autosampler 114 that injects a plurality of prepared sample gases into the sample introduction unit 113 in a predetermined order; a carrier gas supply unit 115 that supplies a carrier gas to the sample introduction unit 113; a flame ionization detector (FID) 116 connected to the outlet end of the first column 111; an electron capture detector (ECD) 117 connected to the outlet end of the second column 112; a methanizer 118 attached to the FID 116; an FID detector gas supply unit 119 that supplies a detector gas to the FID 116; an ECD detector gas supply unit 120 that supplies a detector gas to the ECD 117; a heater 121 and a temperature sensor 122 disposed inside the column oven 110; a heater drive unit 123 that supplies a heating current to the heater 121; a temperature control unit 124 that controls the heater drive unit 123 based on input from the temperature sensor 122 so that the inside of the column oven 110 reaches a target temperature; and a control unit 125 that controls the above-mentioned units. In the present embodiment, the control unit 125 corresponds to the control unit and the detector gas supply control unit of the present invention, and the heater 121, the temperature sensor 122, the heater drive unit 123, and the temperature control unit 124 correspond to the temperature control unit of the present invention.

The control unit 125 is mainly configured around a microcomputer including a CPU, RAM, ROM, and the like. It should be noted that at least a part of the functions of the control unit 125 may be realized by executing dedicated control software pre-installed on a personal computer on said computer.

The first column 111 and the second column 112 are both capillary columns or micropacked columns (packed columns with an inner diameter of 1 mm or less). The inlet ends of these columns 111, 112 are connected to the sample introduction unit 113 via a branch adapter 126. The branch adapter 126 splits the gas flow from the sample introduction unit 113 into two, and comprises one inlet and two outlets. The inlet is connected to the gas outlet of the sample introduction unit 113, one of the two outlets is connected to the inlet end of the first column 111, and the other is connected to the inlet end of the second column 112.

The second column 112 is an adsorption-type column that performs component separation by gas-solid chromatography. The stationary phase held in the adsorption-type column may be any that can adsorb N2O. As such a stationary phase, for example, an adsorbent made of porous particles can be used. As the adsorbent made of porous particles, for example, alumina, activated carbon, zeolite, or silica gel can be used. More specifically, as the adsorbent made of porous particles, for example, a Molecular Sieve made of synthetic zeolite particles can be suitably used. It is desirable to use a Molecular Sieve with a pore size of 0.3 nm or more (more desirably 0.4 nm or more).

On the other hand, the first column 111 may be any column that can clearly separate CH4 and CO2. For example, in addition to an adsorption-type column as described above, a partition-type column that performs component separation by gas-liquid chromatography can also be used. As the partition-type column, one can be used in which a non-volatile liquid is held on carrier particles or on the inner wall surface of a capillary. As the non-volatile liquid, for example, liquid phases generally used for capillary columns, such as methyl silicone-based, phenylmethyl-based, cyanopropylphenyl-based, trifluoropropyl-based, or polyethylene glycol-based liquid phases, can be used.

The carrier gas supply unit 115, the FID detector gas supply unit 119, and the ECD detector gas supply unit 120 each include a gas source (not shown) such as a gas cylinder or a gas generator, and an adjustment mechanism (not shown) that adjusts the flow rate, pressure, or linear velocity of the gas flowing out from the gas source. In the present embodiment, the carrier gas supply unit 115 supplies N2 as a carrier gas to the sample introduction unit 113. Further, the FID detector gas supply unit 119 supplies H2 and air as detector gases (gases necessary for detecting the target components) to the FID 116, and the ECD detector gas supply unit 120 supplies N2 as a detector gas to the ECD 117.

The methanizer 118 reduces CO2 to CH4 by reaction with H2, and in the present embodiment, a jet-type methanizer 118 is installed inside the FID 116. The jet-type methanizer 118 is formed by packing a catalyst inside the nozzle (jet) of the FID 116. However, the methanizer 118 in the present embodiment is not limited to the jet-type one; for example, it may be a tube-type methanizer in which a nickel catalyst is packed into a tube. In that case, the tube-type methanizer is inserted into the gas flow path between the outlet end of the first column 111 and the FID 116 using a flow path switching valve or the like.

When performing analysis with the gas analyzer according to the present embodiment, first, a carrier gas (i.e., N2) is supplied from the carrier gas supply unit 115 to the sample introduction unit 113 at a predetermined constant flow rate, pressure, or linear velocity. The flow of this carrier gas is split into two at a predetermined ratio by a branch adapter 126 provided immediately after the sample introduction unit 113, one part flowing through the first column 111 to reach the FID 116, and the other part flowing through the second column 112 to reach the ECD 117.

Subsequently, with the carrier gas flowing as described above, a predetermined amount of sample gas is injected from the autosampler 114 into the sample introduction unit 113, whereby the sample gas is sent into the first column 111 and the second column 112 along with the carrier gas flow. At this time, the temperature inside the column oven 110 is set to a temperature lower than a first temperature, which is the upper limit of the temperature at which N2O is adsorbed in the column 112 and does not desorb, at the point when the sample gas reaches the inlet end of the second column 112. Thereafter, the temperature is gradually raised to a temperature higher than the first temperature. Specifically, for example, the control unit 125 controls the temperature control unit 124 such that the temperature inside the column oven 110 is set to 50°C or lower at the time of injecting the sample gas into the sample introduction unit 113, and then, after a predetermined time has elapsed from the timing when the sample gas reaches the inlet end of the second column 112, the heating of the column oven 110 is started. The time from the injection of the sample gas into the sample introduction unit 113 until the sample gas reaches the inlet end of the second column 112 can be determined in advance experimentally or by calculation. Thereafter, when the temperature inside the column oven 110 reaches a predetermined temperature (e.g., 200°C to 300°C, more desirably 210°C to 250°C), the heating is terminated, and that temperature is maintained for a predetermined period of time.

The various sample components contained in the sample gas are separated in the time direction while passing through the first column 111 or the second column 112 along with the carrier gas flow, and reach the FID 116 or the ECD 117 with a time difference to be detected. In the present embodiment, CO2 and CH4 eluted from the first column 111 are detected by the FID 116, and N2O eluted from the second column 112 is detected by the ECD 117. At this time, in the first column, CH4 is first eluted from the outlet end and detected by the FID 116, and then, after a time interval, CO2 is eluted from the first column 111, reduced to CH4 by the methanizer 118, and then detected by the FID 116. On the other hand, in the second column 112, N2O is temporarily adsorbed by the adsorbent near the inlet of the column 112, and then, when the temperature inside the column oven 110 exceeds the first temperature, N2O desorbs from the adsorbent, is eluted from the outlet end of the second column 112, and is detected by the ECD 117.

As described above, in the gas analyzer according to the present embodiment, by adopting a configuration in which CO2 eluted from the first column 111 and flowing into the FID 116 is reduced to CH4 by the methanizer 118 before being detected by the FID 116, it becomes possible to detect CO2 with high sensitivity without using a TCD. Therefore, compared to a conventional configuration using three types of detectors (i.e., FID, TCD, and ECD), the apparatus configuration can be simplified and the manufacturing cost can be reduced. Also, conventionally, it was necessary to use He as a carrier gas for high-sensitivity detection of CO2 by TCD, but since the gas analyzer according to the present embodiment can detect CO2 with high sensitivity without using a TCD, there is no need to use He, which is expensive and difficult to obtain stably, as a carrier gas. Furthermore, for high-sensitivity detection of CH4 and CO2 by the FID 116 and high-sensitivity detection of N2O by the ECD 117 in the present embodiment, relatively inexpensive N2 can be used as the carrier gas for both, so the trouble of preparing multiple types of carrier gases can be eliminated, and the running cost of the analysis can be reduced.

Furthermore, by adopting a configuration in which N2O is concentrated by the adsorption-type column, which is the second column 112, before being introduced into the ECD 117 as described above, it becomes possible to detect N2O with sufficient sensitivity even when N2 gas is used as the detector gas in the ECD 117, instead of the conventional Ar+5%CH4. As a result of the above, in the gas analyzer according to the present embodiment, the gases required for analysis (i.e., carrier gas and detector gases) are only N2, H2, and air, which are relatively inexpensive and easily available, so the effort and cost of preparing the gases required for analysis can be reduced.

It should be noted that if a large amount of O2 flows into the ECD 117, there is a risk that the deterioration of the ECD 117 may be accelerated. However, in the gas analyzer according to the present embodiment, by performing the concentration of N2O as described above, N2O and O2 can be eluted from the second column 112 with a sufficient time difference. Therefore, by increasing the flow rate of the detector gas supplied to the ECD 117 at the timing when O2 is eluted from the second column 112, the influence of O2 on the ECD 117 can be suppressed. Specifically, the control unit 125 controls the ECD detector gas supply unit 120 to increase the flow rate of the detector gas (i.e., N2) introduced into the ECD 117 for a predetermined period before and after the time when the retention time of O2 in the second column 112 has passed since the sample gas was introduced into the sample introduction unit 113 (hereinafter referred to as the O2 elution time), for example, for 30 seconds to 2 minutes (more desirably 1 minute) before and after the O2 elution time, respectively. This allows the O2 that has flowed into the ECD 117 to be diluted with a large amount of N2, and the O2 can be quickly discharged from the ECD 117.

Although embodiments for carrying out the present invention have been described above with specific examples, the present invention is not limited to the above-mentioned embodiments, and appropriate modifications can be made within the scope of the spirit of the present invention. For example, in the above embodiment, a configuration was adopted in which the sample gas is automatically introduced into the sample introduction unit 113 by the autosampler 114, but the invention is not limited to this. A configuration may be adopted in which a user manually introduces the sample gas into the sample introduction unit 113 by operating a syringe. Alternatively, a configuration may be adopted in which a gas sampler equipped with a measuring tube is used, the sample gas is guided from a sample gas container to the measuring tube, and then the sample gas is introduced from the measuring tube to the sample introduction unit.

Further, in the above embodiment, N2O is concentrated at the inlet of the second column 112 before being sent to the ECD 117. However, a configuration without such concentration, that is, a configuration without the heating of the column oven 110 by the temperature control unit 124 as described above, or a configuration using a partition-type column as the second column 112 may be adopted. In that case, as the detector gas supplied from the ECD detector gas supply unit 120 to the ECD 117, it is desirable to use Ar+5%CH4 instead of the N2 described above.

Furthermore, a gas analyzer according to another embodiment of the present invention does not necessarily have to have the FID 116. An example of the configuration in such a case is shown in FIG. 2. In this figure, components that are the same as or correspond to those shown in FIG. 1 are given reference numerals with the same last two digits, and their descriptions are omitted as appropriate. The configuration of the gas analyzer in this figure is almost the same as that shown in FIG. 1, except that it does not have the first column 111, the methanizer 118, the FID 116, the FID detector gas supply unit 119, and the branch adapter 126. However, in the following, the column connected to the ECD 217 in this configuration example (i.e., the column corresponding to the second column 112 in the embodiment of FIG. 1) will be referred to as a separation column 212. In this embodiment, similar to the embodiment shown in FIG. 1, N2 is used as the detector gas supplied from the ECD detector gas supply unit 220 to the ECD 217. Then, at the time when the sample gas flows into the inlet end of the separation column 212, which is an adsorption-type column, the temperature control unit 224 controls the temperature inside the column oven 210 to be lower than a first temperature, which is the upper limit of the temperature at which N2O is adsorbed in the separation column 212 and does not desorb. Thereafter, the temperature is gradually raised to or above the first temperature to concentrate N2O before introducing it into the ECD 217. In this configuration example as well, the flow rate of the detector gas introduced into the ECD 217 may be increased at the timing when O2 is eluted from the separation column 212.

### EXAMPLE

Using the gas analyzer according to the above embodiment (the one shown in FIG. 1), five consecutive analyses of the atmosphere as a sample were performed. In this example, a Jetanizer (manufactured by Activated Research Company) was used as the jet-type methanizer 118. Also, SH-Msieve 5A (manufactured by Shimadzu Corporation) was used as the first column 111, and MICROPACKED ST (manufactured by Shinwa Chemical Industries Ltd.) was used as the second column 112. For each analysis, the temperature of the column oven 110 was controlled in a cycle of 35°C (2 min) → heating (40°C/min) → 200°C → heating (25°C/min) → 230°C (3 min).

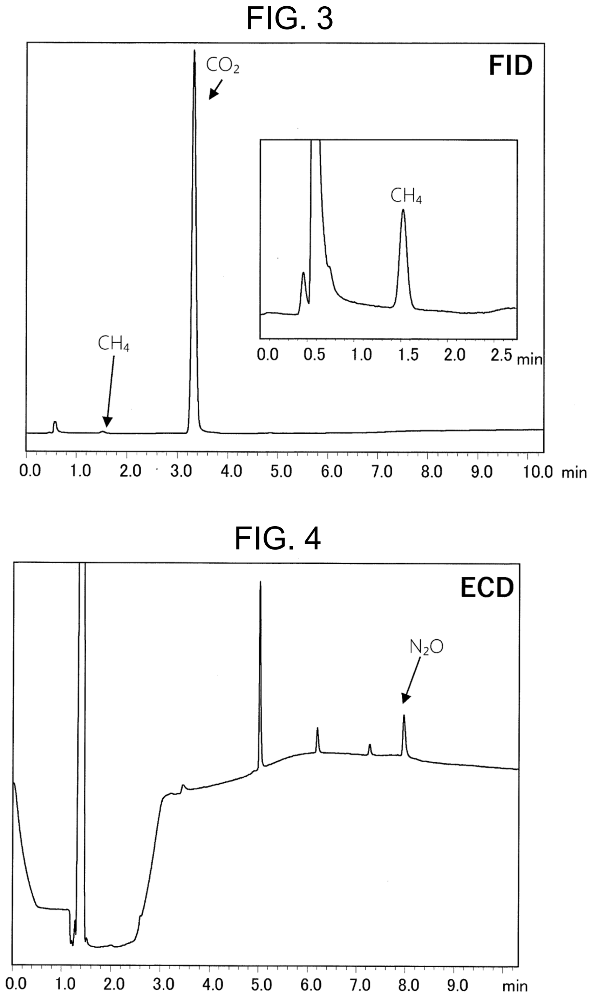

The chromatograms obtained from the analysis are shown in FIG. 3 and FIG. 4. FIG. 3 is a chromatogram created based on the integrated value of the detection signal from the FID 116. In the figure, the peaks of CH4 and CO2 are indicated by arrows, and the vicinity of the CH4 peak is shown enlarged on the right side of the figure. On the other hand, FIG. 4 is a chromatogram created based on the integrated value of the detection signal from the ECD 117, and the peak of N2O is indicated by an arrow. Table 1 shows the quantitative values of CH4, CO2, and N2O in the sample, determined using a calibration curve created with a standard sample and the respective chromatograms, as well as the results of the peak area reproducibility of CH4, CO2, and N2O in the five analyses.

**[Table 1]**

| | CH4 | CO2 | N2O |
|---|---|---|---|
| Quantitative value (ppm) | 1.85 | 417 | 0.33 |
| Area reproducibility (%RSD) | 0.48 | 0.12 | 1.23 |

Since the quantitative values obtained above were close to the values expected as the concentrations of each component in the sample, and the area reproducibility was also good, it was confirmed that the gas analyzer according to the present embodiment can appropriately analyze CH4, CO2, and N2O in the atmosphere.

### [ASPECTS]

It is clear to those skilled in the art that the exemplary embodiments described above are specific examples of the following aspects.

(First Aspect) A gas analyzer according to one aspect of the present invention is a gas analyzer for detecting a greenhouse gas contained in a sample gas, comprising:
a carrier gas supply unit that supplies nitrogen as a carrier gas to each of two different flow paths;
a sample introduction unit that introduces the sample gas into each of the two different flow paths;
a first column and a second column connected to each of the two different flow paths;
a flame ionization detector connected to the first column;
a methanizer that reduces carbon dioxide flowing out of the first column and into the flame ionization detector to methane; and
an electron capture detector connected to the second column.

In the gas analyzer according to the first aspect, among the greenhouse gases contained in the sample gas, methane and carbon dioxide eluted from the first column are detected by the flame ionization detector, and nitrous oxide eluted from the second column is detected by the electron capture detector. This gas analyzer has a configuration in which carbon dioxide flowing out of the first column and into the flame ionization detector is reduced to methane by the methanizer before being detected by the detector, which makes it possible to detect carbon dioxide with high sensitivity without using a thermal conductivity detector. Therefore, compared to the conventional case of simultaneously analyzing the major greenhouse gases methane, carbon dioxide, and nitrous oxide using three types of detectors, namely a flame ionization detector, a thermal conductivity detector, and an electron capture detector, the apparatus configuration can be simplified and the manufacturing cost can be reduced. Also, conventionally, it was necessary to use helium as a carrier gas for high-sensitivity detection of carbon dioxide by a thermal conductivity detector, but since the gas analyzer according to the first aspect can detect carbon dioxide with high sensitivity without using a thermal conductivity detector, there is no need to use helium, which is expensive and difficult to obtain stably, as a carrier gas. Furthermore, for high-sensitivity detection of methane and carbon dioxide by the flame ionization detector and high-sensitivity detection of nitrous oxide by the electron capture detector in the gas analyzer according to this aspect, relatively inexpensive nitrogen can be used as the carrier gas for all, so the trouble of preparing multiple types of carrier gases can be eliminated, and the running cost of the analysis can be reduced.

(Second Aspect) The gas analyzer according to a second aspect is the gas analyzer according to the first aspect, further comprising:
a detector gas supply unit that supplies nitrogen as a detector gas to the electron capture detector.

According to the gas analyzer of the second aspect, by using nitrogen, which is relatively inexpensive and easily available, as the detector gas supplied to the electron capture detector, the cost of preparing the gases required for analysis can be reduced.

(Third Aspect) The gas analyzer according to a third aspect is the gas analyzer according to the first aspect, further comprising:
a detector gas supply unit that supplies a detector gas to the electron capture detector; and
a detector gas supply control unit that controls the detector gas supply unit to increase the flow rate of the detector gas at the timing when oxygen in the sample gas is eluted from the second column.

According to the gas analyzer of the third aspect, by increasing the flow rate of the detector gas supplied to the electron capture detector at the timing when oxygen is eluted from the second column, the possibility that the electron capture detector is adversely affected by the inflow of oxygen can be reduced.

(Fourth Aspect) A gas analyzer according to a fourth aspect is a gas analyzer for detecting a greenhouse gas contained in a sample gas, comprising:
an adsorption-type column;
a sample introduction unit that introduces the sample gas to one end of the adsorption-type column;
an electron capture detector connected to the other end of the adsorption-type column;
a detector gas supply unit that supplies nitrogen as a detector gas to the electron capture detector;
a column oven that accommodates the adsorption-type column;
a temperature control unit that adjusts the temperature inside the column oven; and
a control unit that controls the temperature control unit such that, at the time the sample gas is introduced into the adsorption-type column, the temperature inside the column oven is lower than a first temperature, which is the upper limit of the temperature at which nitrous oxide is adsorbed in the adsorption-type column and does not desorb, and thereafter, the temperature inside the column oven is raised to or above the first temperature.

In the gas analyzer according to the fourth aspect, among the greenhouse gases contained in the sample gas, nitrous oxide eluted from the adsorption-type column is detected by the electron capture detector. According to the gas analyzer of this aspect, since nitrous oxide can be concentrated by the adsorption-type column before being introduced into the electron capture detector, it becomes possible to detect nitrous oxide with sufficient sensitivity even when nitrogen is used as the detector gas in the electron capture detector, instead of the conventional Ar+5%CH4. Also, since nitrogen is relatively inexpensive and easily available, the effort and cost of preparing the gases required for analysis can be reduced.

(Fifth Aspect) The gas analyzer according to a fifth aspect is the gas analyzer according to the fourth aspect, further comprising:
a detector gas supply control unit that controls the detector gas supply unit to increase the flow rate of the detector gas at the timing when oxygen in the sample gas is eluted from the adsorption-type column.

According to the gas analyzer of the fifth aspect, by increasing the flow rate of the detector gas (nitrogen) supplied to the electron capture detector at the timing when oxygen is eluted from the adsorption-type column, the possibility that the electron capture detector is adversely affected by the inflow of oxygen can be reduced.

### REFERENCE SIGNS LIST

- 110: Column oven
- 111: First column
- 112: Second column
- 113: Sample introduction unit
- 114: Autosampler
- 115: Carrier gas supply unit
- 116: Flame ionization detector (FID)
- 117: Electron capture detector (ECD)
- 118: Methanizer
- 119: FID detector gas supply unit
- 120: ECD detector gas supply unit
- 121: Heater
- 122: Temperature sensor
- 123: Heater drive unit
- 124: Temperature control unit
- 125: Control unit
- 126: Branch adapter

## Claims

1. A gas analyzer for detecting a greenhouse gas contained in a sample gas, comprising:
a carrier gas supply unit that supplies nitrogen as a carrier gas to each of two different flow paths;
a sample introduction unit that introduces the sample gas into each of said two different flow paths;
a first column and a second column connected to each of said two different flow paths;
a flame ionization detector connected to said first column;
a methanizer that reduces carbon dioxide flowing out of said first column and into said flame ionization detector to methane; and
an electron capture detector connected to said second column.

2. The gas analyzer according to claim 1, further comprising:
a detector gas supply unit that supplies nitrogen as a detector gas to said electron capture detector.

3. The gas analyzer according to claim 1, further comprising:
a detector gas supply unit that supplies a detector gas to said electron capture detector; and
a detector gas supply control unit that controls said detector gas supply unit to increase the flow rate of the detector gas at the timing when oxygen in said sample gas is eluted from said second column.

4. A gas analyzer for detecting a greenhouse gas contained in a sample gas, comprising:
an adsorption-type column;
a sample introduction unit that introduces said sample gas to one end of said adsorption-type column;
an electron capture detector connected to the other end of said adsorption-type column;
a detector gas supply unit that supplies nitrogen as a detector gas to said electron capture detector;
a column oven that accommodates said adsorption-type column;
a temperature control unit that adjusts the temperature inside said column oven; and
a control unit that controls said temperature control unit such that, at the time said sample gas is introduced into said adsorption-type column, the temperature inside said column oven is lower than a first temperature, which is the upper limit of the temperature at which nitrous oxide is adsorbed in said adsorption-type column and does not desorb, and
thereafter, the temperature inside said column oven is raised to or above said first temperature.

5. The gas analyzer according to claim 4, further comprising:
a detector gas supply control unit that controls said detector gas supply unit to increase the flow rate of the detector gas at the timing when oxygen in said sample gas is eluted from said adsorption-type column.
